(19) Europäisches Patentamt

European Patent Office

Office européen des brevets

(11) **EP 0 963 396 B1**

(12) **EUROPÄISCHE PATENTSCHRIFT**

(45) Veröffentlichungstag und Bekanntmachung des Hinweises auf die Patenterteilung:
**30.10.2002 Patentblatt 2002/44**

(21) Anmeldenummer: **98909435.4**

(22) Anmeldetag: **10.02.1998**

(51) Int Cl.7: **C08G 69/04**, C08G 69/10

(86) Internationale Anmeldenummer:
**PCT/EP98/00740**

(87) Internationale Veröffentlichungsnummer:
**WO 98/037123 (27.08.1998 Gazette 1998/34)**

(54) **VERFAHREN ZUR DURCHFÜHRUNG VON POLYKONDENSATIONSREAKTIONEN**

METHOD FOR CARRYING OUT POLYCONDENSATION REACTIONS

PROCEDE POUR REALISER DES REACTIONS DE POLYCONDENSATION

(84) Benannte Vertragsstaaten:
**BE CH DE ES FR GB IT LI NL**

(30) Priorität: **21.02.1997 DE 19706901**

(43) Veröffentlichungstag der Anmeldung:
**15.12.1999 Patentblatt 1999/50**

(73) Patentinhaber: **Bayer Aktiengesellschaft
51368 Leverkusen (DE)**

(72) Erfinder:
• **WAGNER, Paul**
  **D-40597 Düsseldorf (DE)**
• **DÖBERT, Frank**
  **D-51065 Köln (DE)**
• **MENZEL, Thomas**
  **D-40723 Hilden (DE)**
• **GROTH, Torsten**
  **D-51519 Odenthal (DE)**
• **JOENTGEN, Winfried**
  **D-51067 Köln (DE)**
• **LIESENFELDER, Ulrich**
  **D-51469 Bergisch Gladbach (DE)**
• **WEINSCHENCK, Jörgen**
  **D-47803 Krefeld (DE)**
• **HEISE, Klaus-Peter**
  **D-51519 Odenthal (DE)**

(56) Entgegenhaltungen:
**EP-A- 0 798 329          DE-A- 4 425 951**

Bemerkungen:
Die Akte enthält technische Angaben, die nach dem Eingang der Anmeldung eingereicht wurden und die nicht in dieser Patentschrift enthalten sind.

**Beschreibung**

Eine Polykondensationsreaktion ist eine chemische Reaktion, bei der stufenweise ein Makromolekül aufgebaut wird (Emons, H.H.; Fedtke, M.; Hellmond, P.; Landschulz, G.; Pöschl, R.; Pritzkow, W.; Rätzsch, M.; Zimmermann, G.; Lehrbuch der Technischen Chemie; VEB Deutscher Verlag für Grundstoffindustrie, Leipzig, 1984). Bei jedem Kondensationsschritt entsteht ein Reaktionsprodukt, das mit anderen Reaktionspartnern im Gleichgewicht steht. Die Reaktion ist also eine Gleichgewichtsreaktion. Die Reaktion erfolgt jeweils zwischen zwei unterschiedlichen funktionellen Gruppen der Ausgangsstoffe (Monomere), wobei bei jedem Reaktionsschritt ein niedermolekularer Stoff (z.B. Wasser, Halogenwasserstoffe, Alkohole etc.) abgespalten und gleichzeitig eine Polymerkette um einen Monomerbaustein verlängert wird. Produkte der Reaktion sind somit das Makromolekül und die entsprechenden niedermolekularen Spaltprodukte, die mit den Ausgangsstoffen im Gleichgewicht stehen.

Will man bei einer Polykondensationsreaktion einen hohen Umsatz erzielen, so muß man die niedermolekularen Spaltprodukte aus dem Gleichgewicht entfernen, um das Reaktionsgleichgewicht zu den Produkten zu verschieben. Sind die Monomere bei Beginn der Reaktion in einem Lösungsmittel gelöst, kann es zusätzlich die Aufgabe sein, das Lösungsmittel aus dem Reaktionsgemisch ebenfalls zu entfernen. Die niedermolekularen Spaltprodukte können dabei als Lösungsmittel eingesetzt werden.

Bei der Entfernung der niedermolekularen Spaltprodukte bzw. gegebenenfalls des Lösungsmittels kann sich die Viskosität des Reaktionsgemisches von einer niedrigviskosen Lösung (z.B. ähnlich Wasser) bei Beginn der Reaktion bis zu einer hochviskosen Polymerschmelze oder Polymerlösung bei Reaktionsende ändern. Häufig ist es sogar nötig, die niedermolekularen Spaltprodukte und gegebenenfalls das Lösungsmittel bis zu einem trockenen Feststoff zu entfernen, um den gewünschten Reaktionsumsatz zu erzielen.

Die gängige Methode zur Entfernung der niedermolekularen Spaltprodukte bzw. gegebenenfalls des Lösungsmittels ist das Destillieren. D.h., während die Polykondensationsreaktion aufläuft, werden gleichzeitig oder in Stufen (abwechselnd Reaktion und Destillation) die niedermolekularen Spaltprodukte bzw. gegebenenfalls das Lösungsmittel abgedampft.

Chemische Reaktoren für die Durchführung von Polykondensationsrekationen haben daher zwei Aufgaben. Sie müssen in der Lage sein, effizient das Reaktionsgemisch bei kleinen, wie bei großen Viskositäten (gegebenenfalls bis hin zu trockenen Feststoffen) zu vermischen und zu transportieren und gleichzeitig die Möglichkeit geben, die niedermolekularen Spaltprodukte bzw. zusätzlich das Lösungsmittel aus dem Reaktionsgemisch abzudampfen.

In Verfahren für Polykondensationsreaktionen nach dem Stand der Technik werden folgende Reaktoren eingesetzt:

Schneckenreaktoren

Großvolumige Schneckenreaktoren vom Typ ZDS-R wurden von OCKER, Fa. Werner und Pfleiderer, Stuttgart, bereits 1962 zur Polykondensation von Polyestern eingesetzt. Die Maschinen werden bei niedrigen Drehzahlen und langen Verweilzeiten (1 bis 2,5 Stunden eingesetzt). Das Verfahren wird beschrieben in Herrmann: Schneckenmaschinen in der Verfahrenstechnik, Springer Verlag 1972. Nachteilig ist bei diesen Maschinen die aufgrund der niedrigen Drehzahlen geringe Mischwirkung.

Scheibenreaktoren (Fa. Zimmer, Frankfurt/Main)

Dieser Reaktortyp stellt eine kostengünstige Alternative zum Schneckenreaktor dar und wird heute weltweit in der Polyesterproduktion eingesetzt. Das Prinzip des Reaktors beruht auf langsam rotierenden Ringscheiben, die Schmelzefilme und Schleier erzeugen, die eine große Oberfläche für den Stoffübergang bilden. In der normalen Ausführungsform sind die Scheibenreaktoren nicht selbstreinigend. Eine Variante des Reaktors, die mit Abstreifern zur Verbesserung der Selbstreinigung ausgestattet wurde, wird noch im Pilotmaßstab getestet. Der Reaktor kann, wie der Schneckenreaktor, über einen weiten Viskositätsbereich eingesetzt werden. Das Vorhandensein einer sumpfbildenden Schmelze ist jedoch Voraussetzung für die Funktion. Ein Übergang in eine nicht fließfähige Paste bzw. zum Feststoffist nicht möglich.

Zweiwellenextruder

In jüngerer Zeit werden gleichsinnige Zweiwellenschnecken mit geringem Volumen und hohen Drehzahlen zur Polykondendsation eingesetzt. Beispiel: Typ ZSK von Fa. Werner und Pfleiderer, Stuttgart oder Typ ZE von Fa. Berstorff, Hannover. GREVENSTEIN, A.: Reaktive Extrusion und Aufbereitung, Carl Hanser Verlag 1996 nennt als Einsatzfälle Polyethylenterephthalat (PET), Polybutylenterephthalat (PBT), Copolyester, Polyimid (PI) und Polyetherimid (PEI). Die Mischwirkung ist aufgrund der hohen Drehzahlen gut. Gleichzeitig tritt eine hohe Scherung und Energiedissipation ein, was bei empfindlichen Polymeren nachteilig auf die Produktqualität auswirken kann. Wegen des geringen Reaktorvolumens ist dieser Typ jedoch nur für Prozesse interessant, die eine geringe Verweilzeit erfordern (in der Regel < 1 Minute). Technisch wird deshalb meist nur eine Nachkondensation durchgeführt.

Gitterkorbreaktoren (z.B. Fa. Werner und Pfleiderer)

Dieser Reaktortyp bietet ein großes Reaktionsvolumen und somit lange Verweilzeiten und wird großtechnisch für Polykondensationsreaktionen eingesetzt. Er ist jedoch in Bezug auf die maximal verarbeitbare Viskosität des Polymeren gegenüber den anderen Typen beschränkt.

Großvolumige Knetreaktoren (z.B. Fa. List)

In Bezug auf die Misch- und Kneteffizienz reicht dieser Typ an die Zweiwellenextruder heran. Aufgrund des großen Volumens können jedoch auch hohe Verweilzeiten verwirklicht werden. Gegenüber den Reaktortypen 1 bis 3 weisen diese Reaktoren jedoch eine axiale Rückvermischung und Förderwirkung auf, die stark von der Viskosität abhängt, d.h. bei niedriger bis mittlerer Viskosität ist die Rückvermischung hoch und die Förderwirkung schlecht. Für die Beschickung mit einem dünnflüssigen Medium ist dieser Reaktortyp deshalb technisch weniger interessant.
Es wurde gefunden, daß man bei Polykondensationsreaktionen eine wesentliche Verbesserung der Produktqualität erreichen kann, wenn die Polykondensation eines monomeren Eduktes unter externer Zufuhr von Wärme in einer wenigstens zweistufigen, aus einem Vorreaktor und einem Hochviskosreaktor vom Typ CRP mit gleiläufig drehenden Rührwellen bestehenden Reaktorkombination durchgeführt wird, wobei die entstehenden niedermolekularen Spaltprodukte durch Verdampfung entfernt werden und im Vorreaktor eine Aufkonzentrierung des Reaktionsprodukts bis zu einem zähflüssigen Vorprodukt erfolgt. Die Viskosität des zähflüssigen Vorproduktes sollte größer 200 mPas, bevorzugt größer 500 mPas sein. Das zähflüssige Vorprodukt wird dann dem Hochviskosreaktor zugeführt in dem es bei gleichzeitiger Zuführung von thermischer und mechanischer Energie und mit einer Verweilzeit von 20 s bis 60 min vollständig zum Polykondensationsprodukt ausreagiert, wobei die niedermolekularen Spaltprodukte und gegebenenfalls das Lösungsmittel abgezogen und mit dem Produkt aus der erfindungsgemäßen Reaktorkombination ausgeschleust werden. Bei dem Vorreaktor handelt es sich um einen Apparat, in denen ein effizienter und intensiver Wärmetausch gewährleistet ist. Es können dafür alle Arten von fiir den Wärmetausch geeigneten Apparaten eingesetzt werden, die ein genügendes Arbeitsvolumen zur Durchführung der chemischen Reaktion haben (z.B. Rohrbündelwärmetauscher, Fallfilmverdampfer, Plattenwärmetauscher, Temperierbarer-Statischer-Mischer(TSM)-Reaktor, Rührbehälter mit spezieller Rührergeometrie für viskose Produkte etc.). Auch Kombinationen der Wärmetauscher sind als Vorreaktor denkbar.
Der Hochviskosreaktor zeichnet sich durch eine genügende Wärmezufuhr und Zufuhr von mechanischer Energie zum Mischen und Fördern sowie zur Oberflächenerneuerung des Reaktionsgemisches, ein genügendes Reaktorvolumen zur Gewährleistung der Verweilzeit sowie die Fähigkeit, die höherviskose Masse gegebenenfalls bis zur Trockene verarbeiten zu können, aus. Besonders bevorzugt bei diesem Verfahren ist der Aufbruch des entstandenen Feststoffs in viele kleine Partikel. Durch diesen Aufbruch wird die Verdampfung bzw. Abtrennung des bei der Kondensation entstehenden Spaltstoffes erheblich verbessert und die Diffusionswege fiir die Spaltstoffe erheblich reduziert. Neben der effektiveren Abtrennung der Spaltstoffe wird aufgrund der großen Oberfläche der Feststoffpartikel der Wärmeübergang deutlich verbessert, was zu ausreagiertem Produkt führt. Das so hergestellte Produkt hat deutlich weniger Restmonomere und deutlich bessere anwendungstechnische sowie chemisch analytische Kennzahlen.
Bevorzugt wird als Vorreaktor ein Wendelrohrverdampfer bzw. ein anderer Wärmetauscher in Kombination mit einem Wendelrohrreaktor eingesetzt.
Als Hochviskos reaktor wird ein großvolumiger Knetreaktor vom Typ CRP mit gleichläufig drehenden Rührwellen eingesetzt, in dem das Polykondensationsprodukt durch rotierende Knetelemente und/oder Scherelemente umgewälzt und zerkteinert wird.
Die Ausgangsflüssigkeit wird z.B. zunächst durch einen ein- oder mehrphasig betriebenen Wärmetauscher gepumpt und tritt durch ein Entspannungsventil unter teilweiser Verdampfung in ein gewendeltes Rohr ein. Wie bereits von CASPER in CIT 42 (1970), Nr. 6, S. 349ff ausgeführt, bildet sich im gewendelten Rohr eine turbulente Ringströmung der Flüssigkeit aus, was einen guten Wärme- und Stoffübergang gewährleistet, auch bei durch die Reaktion ansteigender Viskosität. Das im Wendelrohr vorkondensierte und teilweise eingedampfte Produkt wird dem großvolumigen Knetreaktor zugeführt. In dem großvolumigen Knetreaktor wird unter ständiger Durchmischung die Polykondensation weitergeführt. Dabei steigt die Viskosität weiter an. In speziellen Fällen findet ein Übergang zu einem nicht mehr fließfähigen Feststoff statt. Für den erfindungsgemäßen Prozeß kann jeder marktgängige Knetreaktor vom Typ CRP mit gleichläufig drehenden Rührwellen eingesetzt werden, sofern er in der Lage ist, die obengenannten Ziele zu erreichen. In unserem Beispiel wird ein Reaktor vom Typ CRP der Fa. List AG, Arisdorf, CH, eingesetzt. Besonders bevorzugt ist ein Gerät mit verstärkten Rotoren.

Die verdampften niedermolekularen Spaltprodukte und gegebenenfalls das Lösungsmittel werden sowohl im Vorreaktor, nach dem Vorreaktor, im Hochviskosreaktor abgezogen und werden mit dem Produkt aus der erfindungsgemäßen Reaktorkombination ausgeschleust.

Die Vorteile der erfindungsgemäßen Reaktorkombination werden im folgenden anhand der Herstellung von Polyasparaginsäure-Natriumsalz (PAA-Na), bzw. der Vorstufe Polysuccinimid (PSI) erläutert.

Zur Produktion von Polysuccinimid wird aus den Edukten Maleinsäureanhydrid (MSA) und Ammoniak ($NH_3$) zunächst diskontinuierlich oder kontinuierlich eine wäßrige Maleinsäure-Ammoniumsalzlösung bzw. eine wäßrige Maleinsäure-Ammoniumsalzlösung mit niedermolekularen Addukten von Maleinsäure-Ammoniumsalz hergestellt und anschließend in der erfindungsgemäßen Reaktorkombination kontinuierlich zu Polysuccinimid polymerisiert. Hierbei werden neben anderen auch Polykondensations- und intramolekulare Cyclokondensationsreaktionen durchlaufen. Bei diesen Kondensationsreaktionen muß zur Erreichung eines hohen Umsatzgrades (bzw. eines hohen Molekulargewichtes) sowohl das Lösungsmittel Wasser als auch das bei der Kondensation abgespaltene Reaktionswasser aus dem Reaktionsgemisch möglichst weit entfernt werden.

Das monomere Edukt kann vorzugsweise durch Umsetzung von 1,4-Butandicarbonsäure oder 1,4-Butendicarbonsäure oder eines Derivates davon mit Ammoniak oder einer Ammoniak-liefernden Verbindung, z.B. Harnstoff, Ammoniumsalze der Kohlensäure, Ammoniumsalze der Phosphorsäure oder Formamid, gewonnen werden.

Als weitere Edukte können in dem erfindungsgemäßen Verfahren anstelle von Maleinsäureanhydrid auch Maleinsäure, Fumarsäure, Apfelsäure, Asparaginsäure und Asparagin sowie Gemische von diesen eingesetzt werden. Weiterhin können dem Reaktionsgemisch in der erfindungsgemäßen Reaktorkombination weitere cokondensierbare Monomere zugesetzt werden. Als cokondensierbare Verbindungen können beispielsweise Fettsäuren, mehrbasische Carbonsäuren, deren Anhydride und Amide, mehrbasische Hydroxycarbonsäuren, deren Anhydride und Amide, Polyhydroxycarbonsäuren, Aminocarbonsäuren, Zuckercarbonsäuren, Alkohole, Polyole, Amine, Polyamine, Aminoalkohole, Aminozucker, Kohlehydrate, ethylenisch ungesättigte Mono- und Polycarbonsäuren, Proteinhydrolysate z.B. Mais-Proteinhydrolysat, Soja-Proteinhydrolysat und Aminosulfonsäuren eingesetzt werden. Zur Unterstützung der Kondensation können den Reaktionsgemischen noch Kondensationshilfsmittel zugesetzt werden. Hier sind beispielsweise Phosphorsäure, Polyphosphorsäure, phosphorige Säure, Phosphonsäure und saure Salze wie Natriumhydrogensulfat, Kaliumhydrogensulfat und Ammoniumhydrogensulfat zu nennen. In einer bevorzugten Ausführungsform werden diese Kondensationshilfsmittel dem Reaktionsgemisch in der letzten Reaktionsstufe im Hochviskosreaktor zugesetzt.

Ein hoher Umsatz korreliert direkt mit einer guten Produktqualität, d.h. guten anwendungstechnischen Eigenschaften, die von den Kunden akzeptiert werden (z.B.: ZnO-Dispergiertest, NACE-Test).

Gemäß einer Weiterentwicklung der Erfindung können die im zweiten Reaktionsschritt im Hochviskosreaktor erhaltenen Polymere anschließend einer Solvolyse bevorzugt einer Hydrolyse unterworfen werden. Das so hergestellte Polymer weist bevorzugt im wesentlichen wiederkehrende Asparaginsäureeinheiten auf.

Diese Polymere dienen vorteilhaft in wäßrigen oder nichtwäßrigen Systemen zur Dispergierung anorganischer oder organischer Teilchen und insbesondere zur Inhibierung und Dispergierung von Niederschlägen bei der Wasserbehandlung.

## Ausführungsbeispiele

Als Vergleichsgrundlage wurden zunächst Versuche nach dem Stand der Technik mit einem einzigen Reaktor durchgeführt.

### a) Wendelrohrreaktor

Das Reaktionsgemisch muß zur Verarbeitung im Wendelrohrreaktor flüssig sein. Dabei kann man bis zu einer viskosen Schmelze eindampfen. Die Produktqualität ist bei Verwendung eines Wendelrohr- oder Vorreaktors deutlich schlechter als bei der erfindungsgemäßen Reaktorkombination (s. Beispiele, $M_w$, ZnO-Test, NACE-Test, Testbeschreibung s.u.). Die Vorreaktoren, wie z.B. ein Wendelrohrreaktor sind einfache und kostengünstige Apparate mit hohen Durchsätzen.

### b) Hochviskosreaktor

Als einziger Reaktor wurde ein Hochviskosreaktor der Fa. List eingesetzt. Das Reaktionsgemisch kann bei den erforderlichen Durchsätzen nicht bis zur Trockene eingedampft werden. Ein List-Reaktor ist nicht zur Verarbeitung niedriger Viskositäten geeignet. Das niedrigviskose Edukt "fließt schnell durch den Reaktor". Der Apparat hat hohe spezifische Maschinenkosten. Der gesamte Eindampfvorgang von der niedrigviskosen wäßrigen Lösung über die hochviskose Schmelze/Lösung bis zum Feststoff wird in einem zur Verarbeitung höherviskoser Stoffe spezialisierten Apparat durchgeführt. Die Produktqualität ist deutlich schlechter als bei der erfindungsgemäßen Reaktorkombination (s. Beispiele, $M_w$, ZnO-Test, NACE-Test, Testbeschreibung s.u.).

**c) Erfindungsgemäßes Verfahren unter Verwendung einer Reaktorkombination**

Der Vorreaktor bestand aus einem Wendelrohrreaktor und der Hochviskosreaktor aus einem Listreaktor. Das erfindungsgemäße Verfahren mit der Reaktorkombination Wendelrohr/Listreaktor stellt gegenüber den Verfahren mit nur einem Reaktor das beste Verfahren dar. Im Wendelrohrreaktor wird die niedrigviskose Eduktlösung bis zu einer höherviskosen Schmelze/Lösung kondensiert. Dem nachgeschalteten List-Reaktor wird dann die höherviskose Schmelze/Lösung, die eine Viskosität von größer 200 mPas, bevorzugt größer 500 mPas besitzen sollte, zugeführt, so daß die Vorteile des Reaktors voll genutzt werden können. Durch das wesentlich größere Reaktorvolumen kann eine höhere Verweilzeit und damit eine niedrigere Reaktionstemperatur realisiert werden. Dadurch ergibt sich eine schonendere, effiziente Produktionsweise, die sich in der besten erreichten Produktqualität äußert (s. Beispiele, $M_w$, ZnO-Test, NACE-Test, Testbeschreibung s.u.).

Die Reaktion und die Eindampfung im Vorreaktor wird bei einer Verweilzeit von 0,5 bis 300 Minuten, bevorzugt 1 bis 20 Minuten und besonders bevorzugt 2 bis 10 Minuten, bei Temperaturen größer 100°C, bevorzugt 100 bis 250°C und besonders bevorzugt 110 bis 220°C, und Drucken von 0,01 bis 100 bar, bevorzugt 0,1 bis 25 bar und besonders bevorzugt 1 bis 10 bar, durchgeführt. Im Hochviskosreaktor werden bei Verweilzeiten von bevorzugt 20 Sekunden bis 60 Minuten und besonders bevorzugt 1 Minute bis 30 Minuten, Temperaturen von 100 bis 350°C, bevorzugt 120 bis 250°C und besonders bevorzugt 140 bis 220°C, und Drucke von 0,01 bis 10 bar, bevorzugt 0,1 bis 3 bar und besonders bevorzugt 0,5 bis 2 bar, eingestellt.

Die Maleinsäure-Ammoniumsalz-Eduktlösung kann diskontinuierlich oder auch kontinuierlich aus Wasser, Maleinsäure und Ammoniak hergestellt werden und der Reaktorkombination zugeführt werden. Dabei ist das Molverhältnis von Stickstoff im Ammoniak zur Maleinsäure von 0,1 bis 25, bevorzugt 0,5 bis 8 und besonders bevorzugt 0,9 bis 4. Der Wasseranteil in der Lösung ist 20 bis 90 Gew.-%, bevorzugt 20 bis 60 Gew.-% und besonders bevorzugt 25 bis 40 Gew.-%. Bei diskontinuierlicher Bereitstellung der Eduktlösung kann es im Vorratskessel zu einer Vorkondensation kommen, bei der im Mittel bis zu 2 Moleküle eine Verbindung eingehen.

Folgende anwendungstechnische Tests und Beurteilungsverfahren wurden zum Vergleich der entstehenden Polykondensationsprodukte verwendet:

Bestimmung des Threshold-Effektes (Inhibierung von Calciumcarbonatausfällungen durch unterstöchiometrische Inhibitorzugabe) nach einer modifizierten NACE[1]-Methode:

Benötigte Lösungen:

1. 12,15 g Calciumchlorid-dihydrat p.a.
68 g Magnesiumchlorid-hexahydrat p.a.
mit destilliertem, $CO_2$-freiem Wasser auf 1 000 ml Lösung aufgefüllt.

2. 7,36g Natriumhydrogencarbonat p.a.
mit destilliertem, $CO_2$-freiem Wasser auf 1 000 ml Lösung aufgefüllt.

3. 1 000 mg der zu untersuchenden Inhibitorsubstanz
mit destilliertem, $CO_2$-freiem Wasser auf 1 000 ml Lösung aufgefüllt.

Die Lösungen 1. und 2. sind vor ihrer Verwendung über ein 0,45 μm Membranfilter zu filtrieren und mit Kohlendioxid zu sättigen. In 250 ml Glasenghalsflaschen werden der gewünschten Meßkonzentration entsprechend Inhibitorlösungen vorgelegt:

| ppm Inhibitor | μL Inhibitorlösung |
|---------------|--------------------|
| 1 | 200 |
| 2 | 400 |
| 3 | 600 |
| 5 | 1000 |
| 10 | 2000 |

Auf die vorgelegten Lösungen werden mit einer 100 ml Dispensette von den Lösungen 1. und 2. jeweils 100 ml eingepumpt. Sofort anschließend werden die Flaschen fest verschlossen, einmal von Hand geschüttelt und in ein

[1] NACE: National Association of Corrosion engineers

auf 70°C erwärmtes Wasserbad gestellt. Bei dieser Temperatur werden die Proben 16 Stunden gelagert. Als Vergleich wird eine Probe ohne Inhibitorzusatz mitgeführt. (Zur Bestimmung des Ausgangswertes wird sofort nach Vermischung der Lösung 1. und 2. der Calciumgehalt durch Titration bestimmt.)

Nach dieser Zeit werden die Proben gleichzeitig aus dem Wasserbad genommen und langsam auf eine Temperatur von 30°C gekühlt. Dann wird von allen eine Probe von 5 ml über ein 0,45 µm Membranfilter in eine Vorlage von ca. 100 ml destilliertes Wasser filtriert und zur Stabilisierung mit 0,5 ml konzentrierter Salzsäure angesäuert. Die nun erforderliche Bestimmung des Calciumgehaltes wird durch Titration gegen einen Indikator durchgeführt.

Die prozentuale Inhibierung wird wie folgt errechnet:

$$\frac{a - b}{c - b} \cdot 100 = \% \text{ Inhibition}$$

    a: Menge an gefundenem Calcium in der Probe
    b: Menge an Calcium in der Blindprobe (nach Temperung)
    c: Menge an Caclium in der Blindprobe (vor Temperung)

## Bestimmung des Feststoffdispergiervermögens am Modell Zinkoxid

1 g des zu untersuchenden Dispergiermittels wird in 50 ml destilliertem Wasser gelöst. Der pH der Probe soll 10 betragen. Die so vorbereitete Probe wird in einen 100 ml Meßkolben überführt und mit destiliertem Wasser aufgefüllt (Stammlösung).
In einem 250 ml Mischzylinder werden 10,0 g ZnO p.A. (Merck) vorgelegt und mit 140 bis 170 ml Wasser angeschlämmt. Hierzu werden die folgenden Dispergiermittelmengen zugesetzt.

| | |
|---|---|
| 50 ppm | 1 ml Stammlösung |
| 100 ppm | 2 ml Stammlösung |
| 250 ppm | 5 ml Stammlösung |
| 500 ppm | 10 ml Stammlösung |
| 1 000 ppm | 20 ml Stammlösung |
| 1 500 ppm | 30 ml Stammlösung |

Das Gemisch wird mit einem Dispergator (z.B. Ultraturrax-Rührer) fiir 30 sec vordispergiert und anschließend auf 200 ml aufgefüllt. Die fertige Probensuspension wird dreimal per Hand umgeschüttelt und 3 Stunden bei Raumtemperatur gelagert.
Anschließend wird mit einer 5 ml Vollpipette bei der 150 ml Marke ein Aliquot entnommen und in einen 50 ml Meßkolben, in welchem 10 ml 1 N Salzsäure und ca. 20 ml Wasser vorgelegt wurden, überführt. Nach Auffüllen des Meßkolbens wird ein Aliquot von 10 ml entnommen und bei pH 11 mit EDTA-Lösung gegen Indikator titriert.

**Auswertung:**

$$\frac{V * t * 81,37 * 5}{0,025 * 100} = \% \text{ ZnO}$$

V       = Volumen EDTA-Lösung
t       = titer EDTA-Lösung
81,37   = Molmasse ZnO
5       = 50/10 aus HCI-Masskolbenentnahme
0,025   = 5/200 aus Standzylinderentnahme
100    = %

## Beispiel 1

Das nachfolgend beschiebene Beispiel wurde entsprechend der allgemeinen Verfahrensbeschreibung c) unter Verwendung einer Reaktorkombination durchgeführt.

**Herstellung von Maleinsäure NH$_4$-Salz-Lösung**

In einem 250 l Kessel werden 51,7 kg H$_2$O mit einer Temperatur von 60°C vorgelegt und 75 kg festes Maleinsäureanhydrid zugegeben, so daß sich eine Maleinsäurelösung bildet. Anschließend werden 16,9 kg Ammoniak (gasförmig) unter Kühlung bei 90 bis 100°C eindosiert. Die entstandene Maleinsäure NH$_4$-Salz-Lösung wird bei 100 bis 105°C temperiert und mit 41 kg pro Stunde in eine Anlage zur Polykondensation gepumpt.

**Herstellung von Polysuccinimid**

Die Kondensationsanlage besteht aus einem 8,4 m langen Vorwärmer (Innendurchmesser 10 mm), in dem die Lösung auf 192°C bei einem Druck von 10 bar erwärmt wird. Aus dem Vorwärmer gelangt die Lösung über eine Blende in einen 15 m langen Wendelrohrverdampfer (Innendurchmesser 15 mm), in dem die Reaktionslösung eine Temperatur von 193°C erreicht und einen Druck von 2,9 bar nach der Blende aufweist. Über eine 6 m lange Rohrleitung wird das Reaktionsgemisch mit 195°C in einen Knetapparat der Fa. List (CRP 12 Konti) geleitet. Im List-Reaktor wird das Reaktionsgemisch bei Temperaturen von 190 bis 195°C und Drehzahlen von 31/min zur Trockne eingedampft und dabei vollständig polymerisiert. Das entstehende körnige Polysuccinimid wird in einer Meng von ca. 21 kg pro Stunde erhalten. Es weist eine Verseifungszahl von 10,61 mmol NaOH/g PSI auf.

**Herstellung von Polyasparaginsäure Na-Salz-Lösung**

In eine Vorlage von 2 100 g Wasser und 360 g = 9 mol NaOH werden bei 20°C unter Rühren 1 000 g Polysuccinimid in Portionen gegeben. Dabei steigt die Temperatur durch die Exothermie auf 60°C und das PSI geht in Lösung. Es werden weitere 64,4 g = 1,61 Mol NaOH hinzugegeben, die Temperatur auf 100 bis 110°C erhöht und 3 x 700 g Ammoniak-Wasser unter Zusatz von 2 x 700 g Wasser abdestilliert. Nach der Zugabe von 175,6 g Wasser werden 3 000 g einer 43,7 gew.-%igen Polyasparagiensäure Na-Salz-Lösung erhalten.

| Molekulargewichtsverteilung | ZnO-Dispergiertest | NACE-Test |
|---|---|---|
| nach GPCM$_w$ | 10 - 300 mg | 3 ppm/10 ppm |
| [g/mol] | [% d.Th.] | [% d.Th.] |
| 2 350 | 80 | 78 / 100 |

## Beispiel 2

Das nachfolgend beschriebene Beispiel wurde unter Verwendung eines einzigen Reaktors gemäß der allgemeinen Verfahrensbeschreibung a) durchgeführt (Stand der Technik).

**Herstellung von Maleinsäure NH$_4$-Salz-Lösung**

Eine auf 100 bis 105°C temperierte Maleinsäure NH$_4$-Salz-Lösung, hergestellt wie in Beispiel 1, wird in einer Menge von 40 kg/h in eine Anlage zur Polykondensation gepumpt.

**Herstellung von Polyasparaginsäure Na/NH$_4$-Salz-Lösung**

Die Kondensationsanlage besteht aus einem 8,4 m langen Vorwärmer (Innendurchmesser (10 mm), in dem die Lösung auf 230°C bei einem Druck von 45 bar erwärmt wird. Aus dem Vorwärmer gelangt die Lösung über eine Blende in einen 15 m langen Wendelrohrverdampfer (Innendurchmesser 15 mm), in dem die Reaktionslösung eine Temperatur von 205°C erreicht und einen Druck von 7,8 bar nach der Blende aufweist. Über eine 6 m lange Rohrleitung wird das Reaktionsgemisch in einen Kessel geleitet. Simultan werden in diesem Kessel 40 kg/h 15 %ige wäßrige Natronlauge eindosiert. Die entstehende wäßrige Polyasparaginsäure-Lösung weist eine Verseifungszahl von 2,09 mmol NaOH/g Lösung auf.

**Herstellung von Polyasparaginsäure Na-Salz-Lösung**

Zu einer Vorlage von 3 000 g Polyasparaginsäure Na/NH$_4$-Salz-Lösung werden 501,6 g = 6,27 mol 50 %ige NaOH-Lösung gegeben. Die Temperatur wird auf 100 bis 110°C erhöht und unter Zusatz von 2 x 600 g Wasser werden 3 x 600 g Ammoniakwasser abdestilliert. Es verbleiben 2 901,6 g einer 42,8 %igen PAS Na-Salz-Lösung.

| Molekulargewichtsverteilung | ZnO-Dispergiertest | NACE-Test |
|---|---|---|
| nach GPCM$_w$ | 10 - 300 mg | 3 ppm/10 ppm |
| [g/mol] | [% d.Th.] | [% d.Th.] |
| 1 450 | 64 | 60 / 79 |

### Beispiel 3

Das nachfolgend beschriebene Beispiel wurde nach der allgemeinen Verfahrensbeschreibung b) (Stand der Technik durchgeführt).

**Herstellung von Maleinsäure NH$_4$-Salz-Lösung**

Eine auf 100 bis 105°C temperierte Maleinsäure NH$_4$-Salz-Lösung, hergestellt wie in Beispiel 1, wird in einer Menge von 40 kg/h in einen Knetapparat zur Polykondensation gepumpt.

**Herstellung der Polykondensatschmelze**

Der Kessel ist über eine 29,4 m lange Rohrleitung (Innendurchmesser 10 bis 15 mm), die auf 100 bis 10°C beheizt wird, mit dem Knetapparat verbunden. Im Knetapparat der Fa. List (CRP 12 Konti) wird das Reaktionsgemisch bei Temperaturen von 190 bis 195°C und Drehzahlen von 31/min polymerisiert. Das entstehende Polykondensat, eine hochviskose Schmelze, wird in einer Menge von ca. 22 kg pro Stunde erhalten. Es weist eine Verseifungszahl von 10,51 mmol NaOH/g Schmelze auf.

**Herstellung von Polyasparaginsäure Na-Salz-Lösung**

In eine Vorlage von 2 100 g Wasser und 360 g = 9 mol NaOH werden bei 20°C unter Rühren 1 000 g Polykondensatschmelze in Portionen gegeben. Dabei steigt die Temperatur durch die Exothermie auf 60°C und das Polykondensat geht in Lösung. Es werden weitere 60,4 g = 1,51 mol NaOH hinzugegeben, die Temperatur auf 100 bis 110°C erhöht und 3 x 700 g Ammoniak-Wasser unter Zusatz von 2 x 700 g Wasser abdestilliert. Nach der Zugabe von 175,6 g Wasser werden 3 000 g einer 39,1 gew.-%igen Polyasparaginsäure Na-Salz-Lösung erhalten.

| Molekulargewichtsverteilung | ZnO-Dispergiertest | NACE-Test |
|---|---|---|
| nach GPCM$_w$ | 10 - 300 mg | 3 ppm/10 ppm |
| [g/mol] | [% d.Th.] | [% d.Th.] |
| 1 450 | 34 | 42 / 69 |

### Patentansprüche

**1.**   Verfahren zur Durchführung von Polykondensationsreaktionen, **dadurch gekennzeichnet, dass** die Polykondensation eines monomeren Eduktes bei externer Zufuhr von Wärme in einer wenigstens zweistufigen, aus einem Vorreaktor und einem Hochviskosreaktor vom Typ CRP mit gleichläufig drehenden Rührwellen bestehende Reaktorkombination durchgeführt wird, wobei die entstehenden niedermolekularen Spaltprodukte durch Verdampfung entfernt werden und dass im Vorreaktor eine Aufkonzentrierung des Reaktionsproduktes bis zu einem zähflüssigen Vorprodukt erfolgt und das Vorprodukt im Hochviskosreaktor unter Zufuhr von thermischer und mechanischer Energie mit einer Verweilzeit von 20 s bis 60 min vollständig zum Polykondensationsprodukt ausreagiert und die verdampften niedermolekularen Spaltprodukte mit dem Produkt aus der Reaktorkombination ausgeschleust werden.

**2.**   Verfahren gemäß Anspruch 1, **dadurch gekennzeichnet, dass** das Edukt durch die Umsetzung von Maleinsäure, Fumarsäure, Äpfelsäure, Asparaginsäure, Maleinsäureanhydrid oder Gemischen davon mit Ammoniak oder einer Ammoniak liefernden Verbindung gewonnen wird.

**3.**   Verfahren gemäß Anspruch 1, **dadurch gekennzeichnet, dass** das Ausschleusen der Spaltprodutke mit dem Produkt sowohl im Vorreaktor, nach dem Vorreaktor, im Hochviskosreaktor erfolgt.

4. Verfahren gemäß der Ansprüche 1 bis 4, **dadurch gekennzeichnet, dass** die niedermolekularen Spaltprodukte und das Lösungsmittel ausgeschleust werden.

5. Verfahren nach Anspruch 1, **dadurch gekennzeichnet, dass** die Reaktion im Vorreaktor bei einem Druck von 0,01 bar bis 100 bar, bei Temperaturen über 100°C und mit einer Verweilzeit von 0,5 min bis 300 min und im Hochviskosreaktor bei einer Temperatur von 100°C bis 300°C und bei einem Druck von 0,01 bar bis 10 bar durchgeführt wird.

6. Verfahren nach Anspruch 5, **dadurch gekennzeichnet, dass** die Reaktion im Vorreaktor bei Temperaturen von 100°C bis 250°C, bei einem Druck von 0,1 bar bis 25 bar und mit einer Verweilzeit von 1 min bis 20 min, und im Hochviskosreaktor bei Temperaturen von 120°C bis 250°C, bei einem Druck von 0,1 bar bis 3 bar, und mit einer Verweilzeit von 20 s bis 60 min durchgeführt wird.

7. Verfahren nach Anspruch 1, **dadurch gekennzeichnet, dass** als Vorreaktor alle Arten von für den Wärmeaustausch geeigneten Apparaturen eingesetzt werden, die ein genügendes Arbeitsvolumen zur Durchführung der chemischen Reaktion haben.

8. Verfahren nach Anspruch 7, **dadurch gekennzeichnet, dass** der Vorreaktor ein Wendelrohrverdampfer bzw. ein anderer Wärmetauscher in Kombination mit einem Wendelrohrreaktor ist.

9. Verfahren nach Anspruch 1, **dadurch gekennzeichnet, dass** das Polykondensationsprodukt im Hochviskosreaktor bis zum zerkleinerten Feststoff umgesetzt wird.

10. Verfahren nach wenigstens einem der vorhergehenden Ansprüche, **dadurch gekennzeichnet, dass** die im zweiten Reaktionsschritt erhaltenen Polymere, bevorzugt Polysuccinimid, anschließend einer Solvolyse, bevorzugt Hydrolyse zu Polymeren unterworfen werden, die im wesentlichen wiederkehrende Asparaginsäure-Einheiten aufweisen.

## Claims

1. Method for carrying out polycondensation reactions, **characterized in that** the polycondensation of a monomeric starting material is carried out with external supply of heat in a reactor combination which has at least two stages and is composed of a pre-reactor and of a CRP type high-viscosity reactor with corotating agitator shafts, where the low-molecular-weight elimination products produced are removed by evaporation, and **in that** the reaction product in the pre-reactor becomes concentrated to give a high-viscosity preliminary product and the preliminary product reacts to completion in the high-viscosity reactor with supply of thermal and mechanical energy with a residence time of from 20 s to 60 min to give the polycondensation product and the evaporated low-molecular-weight elimination products are drawn off with the product from the reactor combination.

2. Method according to Claim 1, **characterized in that** the starting material is obtained by reacting maleic acid, fumaric acid, malic acid, aspartic acid, maleic anhydride or mixtures thereof with ammonia or with a compound supplying ammonia.

3. Process according to Claim 1, **characterized in that** the drawing-off of the elimination products with the product takes place in the pre-reactor, downstream of the pre-reactor, in the high-viscosity reactor.

4. Process according to Claims 1 to 4, **characterized in that** the low-molecular-weight elimination products and the solvent are drawn off.

5. Method according to Claim 1, **characterized in that** the reaction in the pre-reactor is carried out at a pressure of from 0.01 bar to 100 bar, at temperatures above 100°C and with a residence time of from 0.5 min to 300 min, and the reaction in the high-viscosity reactor is carried out at a temperature of from 100°C to 300°C and at a pressure of from 0.01 bar to 10 bar.

6. Method according to Claim 5, **characterized in that** the reaction in the pre-reactor is carried out at temperatures of from 100°C to 250°C, at a pressure of from 0.1 bar to 25 bar, and with a residence time of from 1 min to 20 min, and the reaction in the high-viscosity reactor is carried out at temperatures of from 120°C to 250°C, at a pressure of from 0.1 bar to 3 bar, and with a residence time of from 20 s to 60 min.

**7.** Method according to Claim 1, **characterized in that** the pre-reactor used is any type of apparatus suitable for heat exchange and having an operating capacity sufficient for carrying out the chemical reaction.

**8.** Process according to Claim 7, **characterized in that** the pre-reactor used comprises any type of apparatus suitable for heat exchange and having sufficient volume capacity to carry out the chemical reaction.

**9.** Method according to Claim 1, **characterized in that** the conversion of the polycondensation product in the high-viscosity reactor proceeds as far as the comminuted solid.

**10.** Method according to at least one of the preceding claims, **characterized in that** the polymers, preferably polysuccinimide, obtained in the second reaction stage are then subjected to solvolysis, preferably hydrolysis, to give polymers which essentially have recurring aspartic acid units.

**Revendications**

**1.** Procédé de réalisation de réactions de polycondensation, **caractérisé en ce que** la polycondensation d'un éduit monomère est réalisée avec apport externe de chaleur dans une combinaison de réacteurs à au moins deux étages, constituée d'un préréacteur et d'un réacteur pour produits de haute viscosité de type CRP avec agitateurs tournant dans le même sens, les produits de décomposition à faible poids moléculaire formés étant éliminés par vaporisation et **en ce qu'**une concentration du produit de réaction jusqu'à un produit préalable visqueux se déroule dans le préréacteur, le produit préalable réagissant complètement dans le réacteur pour produits de haute viscosité avec apport d'énergie thermique et mécanique avec un temps de séjour de 20 s à 60 min pour former le produit de polycondensation, les produits de décomposition à faible poids moléculaire évaporés étant évacués de la combinaison de réacteurs avec le produit.

**2.** Procédé selon la revendication 1, **caractérisé en ce que** l'éduit est obtenu par conversion d'acide maléique, d'acide fumarique, d'acide malique, d'acide aspartique, d'anhydride d'acide maléique ou de leurs mélanges avec l'ammoniac ou un composé libérant de l'ammoniac.

**3.** Procédé selon la revendication 1, **caractérisé en ce que** l'évacuation des produits de décomposition avec le produit a lieu tant dans le préréacteur, après le préréacteur que dans le réacteur pour produits de haute viscosité.

**4.** Procédé selon les revendications 1 à 4, **caractérisé en ce que** les produits de décomposition à faible poids moléculaire et le solvant sont évacués.

**5.** Procédé suivant la revendication 1, **caractérisé en ce que** la réaction se déroule dans le préréacteur sous une pression de 0,01 bar à 100 bars, à des températures supérieures à 100°C et avec un temps de séjour de 0,5 min à 300 min et dans le réacteur pour produits de haute viscosité à une température de 100°C à 300°C et sous une pression de 0,01 bar à 10 bars.

**6.** Procédé suivant la revendication 5, **caractérisé en ce que** la réaction se déroule dans le préréacteur à des températures de 100°C à 250°C, sous une pression de 0,1 bar à 25 bars et avec un temps de séjour de 1 min à 20 min et dans le réacteur pour produits de haute viscosité à une température de 120°C à 250°C, sous une pression de 0,1 bar à 3 bars et avec un temps de séjour de 20 s à 60 min.

**7.** Procédé suivant la revendication 1, **caractérisé en ce qu'**on utilise comme préréacteur tous les types d'appareils convenant pour l'échange de chaleur qui offrent un volume de travail suffisant pour la réalisation de la réaction chimique.

**8.** Procédé suivant la revendication 7, **caractérisé en ce que** le préréacteur est un évaporateur à tubes hélicoïdaux ou un autre échangeur de chaleur combiné avec un réacteur à tubes hélicoïdaux.

**9.** Procédé suivant la revendication 1, **caractérisé en ce que** le produit de polycondensation dans le réacteur pour produits de haute viscosité est converti jusqu'à obtention d'une matière solide.

10. Procédé suivant au moins une des revendications précédentes, **caractérisé en ce que** les polymères obtenus lors de la deuxième étape de réaction, de préférence du polysuccinimide, sont ensuite soumis à une solvolyse, de préférence une hydrolyse en polymères, qui présentent essentiellement des groupes d'acide aspartique répétitifs.